# EUROPEAN PATENT APPLICATION

(11) **EP 4 552 889 A1**
(43) Date of publication of application: **14.05.2025**
(21) Application number: 23208590.2
(22) Date of filing: 08.11.2023
(51) Int. Cl.: B60K 11/08

(54) **AIR INFLOW CONTROL DEVICE**

(71) Applicant: VALEO SYSTEMES THERMIQUES, 78320 Le Mesnil Saint-Denis (FR)
(72) Inventor: ARUMUGAM, Murugan, 600130 Chennai (IN); GUGGILLA, Mohanthsrinivas, 600130 Chennai (IN); PAWANPRASAD, Vijendrakumar, 600130 Chennai (IN); SUBRAMANIAN, Arunkumar, 600130 Chennai (IN); VELASCO, Sebastien, 600130 Chennai (IN)
(74) Representative: Valeo Systèmes Thermiques

(57) **Abstract**

An air inflow control device (1) for a motor vehicle, comprising a frame (2) in which at least one air intake (3, 4) is provided, and at least two flaps (5-8) behind the at least one air intake (3, 4), wherein the flaps (5-8) are interlinked. The air inflow control device (1) further comprises a flap actuator device (13) configured to drive a driving flap (8) of the at least two interlinked flaps (5-8), to stack sequentially the at least two interlinked flaps (5-8), one after the other, the at least two interlinked flaps (5-8) being stacked the ones behind the others behind an edge of the at least one air intake (3, 4) in the open position, and to unstack sequentially the at least two interlinked flaps (5-8), one after the other, the at least two interlinked flaps (5-8) being arranged one next to the other in a closed position.

## Description

### TECHNICAL FIELD

The present invention relates to an air inflow control device for a motor vehicle, and in particular relates to the field of flap panels for air intakes of motor vehicles.

### BACKGROUND OF THE INVENTION

The front faces of motor vehicles generally comprise air intakes and flap panels also designated by grille or by the acronym AGS (for "Active Grille Shutter"), mounted behind the air intakes of the vehicle.

Flap panels enable the introduction of air via a vehicle motor grille to be opened or closed.

In the open position, the air can circulate through the grille and take part in the cooling of the engine of the motor vehicle. In the closed position, the air does not enter via the grille, which reduces the drag and thereby makes it possible to reduce the consumption of fuel and emissions of CO₂.

The active grille shutter thus makes it possible to reduce the consumption of energy and the pollution when the engine does not need to be cooled by the outdoor air.

An active grille shutter comprises in a conventional manner an activator (also referred to as actuator or motor) controlling the flaps and enabling the opening or closing of the air inflow. The flaps are open when the engine of the motor vehicle has a requirement for cooling, and the flaps are closed when the engine of the motor vehicle is sufficiently cooled.

The flaps take the form of horizontal or vertical blades pivotably mounted around each central flap axis on the panel. The inclination of the flaps can be controlled between a vertical blanking position blocking the passage of air and a plurality of intermediate positions leading to an open position in which a maximum flow of air can circulate.

Systems comprising pairs of active and passive flaps are also known. Actives flaps can move in translation behind passive and stationary blades in the open position.

However, in all these systems, blades remain in the air intake in the open position, disturbing the passage of air.

### SUMMARY OF THE INVENTION

An objective of the present invention is to provide an air inflow control device optimized for better cooling performances and having reduced costs.

For this purpose, the present invention relates to an air inflow control device for a motor vehicle, comprising:
- a frame in which at least one air intake is provided, and
- at least two flaps behind the at least one air intake,
characterised in that the flaps are interlinked, the air inflow control device further comprising a flap actuator device configured to drive a driving flap of the at least two interlinked flaps,
- to stack sequentially the at least two interlinked flaps, one after the other, the at least two interlinked flaps being stacked the ones behind the others behind an edge of the at least one air intake in the open position, and
- to unstack sequentially the at least two interlinked flaps, one after the other, the at least two interlinked flaps being arranged one next to the other in a closed position.

As all the flaps are stacked behind the edge of the at least one air intake in the open position, a maximum flow of air can circulate. With such an arrangement, a better cooling performance can be performed in the open position. Moreover, the aesthetic of the opening and closing sequence is improved. In addition, the signature of the builder can be recognized. In addition, this arrangement is easy to manufacture.

The air inflow control device can also comprise one or more of the features which are described hereinbelow, taken alone or in combination.

The at least two interlinked flaps may be arranged horizontally the one above the other in the closed position.

The driving flap may be the lowest flap in the closed position.

The opening sequence towards the open position may follow an opening direction from down to up, the closing sequence towards the closed position following a closing direction from up to down.

The air inflow control device may comprise at least two air intakes, the at least two interlinked flaps behind the at least two air intakes being horizontally aligned at least by pair. The driving flap of each at least two interlinked flaps behind each at least two air intakes may be driven by the flap actuator device. Thus, as only one flap actuator device is required, costs can be reduced.

According to an embodiment, the at least two interlinked flaps comprise each at least one respective first pin, the air inflow intake device further comprises at least one connecting piece comprising a hole in which a first pin of a flap is engaged and a slider in which a first pin of an adjacent flap can slide.

According to an embodiment, the flap actuator device comprises a rotating actuator and a pivoting lever, the lever having one end linked to the actuator and one end which cooperates with at least one driving flap.

The frame may comprise frame slots parallel to one another, the at least two interlinked flaps comprising each at least one respective second pin which slides in a respective frame slot, the driving flap also sliding in a slot formed in the lever such that the at least two interlinked flaps move in their respective frame slot with the angular movement of the lever provided by the actuator.

The frame may comprise additional frame slots parallel to the frame slot wherein the at least one first pin can also slide.

According to another embodiment, the flap actuator device comprises a rotating actuator, a pinion mounted on a shaft of the actuator and a curved rack linked to a driving flap of the interlinked flaps, the curved rack meshing the pinion.

The frame may comprise frame slots parallel to one another, the at least two interlinked flaps comprising at least one respective first pin which slides in a respective frame slot such that the interlinked flaps move in their respective frame slot with the movement of the curved rack provided by the actuator.

The invention will be better understood in view of the following description, referring to the annexed figures in which:
[Fig.1] Figure 1 is a schematic representation in perspective of a first example of air inflow control device, shown in a closed position.
[Fig.2] Figure 2 shows a rear view of the air inflow control device of figure 1.
[Fig.3] Figure 3 shows the air inflow control device of figure 2 without a frame.
[Fig.4] Figure 4 shows a side of the flaps in one air intake of the air inflow control device of figure 2.
[Fig.5A] Figure 5A shows a front view of the air inflow control device of figure 1 in an initial closed position.
[Fig.5B] Figure 5B shows a similar and successive view of figure 5A with the air inflow control device in a first step of an opening sequence.
[Fig.5C] Figure 5C shows a similar and successive view of figure 5B with the air inflow control device in a second step of the opening sequence.
[Fig.5D] Figure 5D shows a similar and successive view of figure 5C with the air inflow control device in a third step of the opening sequence.
[Fig.5E] Figure 5E shows a similar and successive view of figure 5D with the air inflow control device in open position.
[Fig.6A] Figure 6A shows a schematic side view of the air inflow control device in the beginning of the opening sequence.
[Fig.6B] Figure 6B shows a similar and successive view of figure 6A.
[Fig.6C] Figure 6C shows a similar and successive view of figure 6B.
[Fig.6D] Figure 6D shows a similar and successive view of figure 6C with the air inflow control device in open position.
[Fig.7] Figure 7 is a schematic representation in perspective of a second example of air inflow control device, shown in a closed position.
[Fig.8] Figure 8 shows a rear view of the air inflow control device of figure 1 without the frame.
[Fig.9] Figure 9 shows an enlarged view of the flap actuator device of the air inflow control device of figure 7.
[Fig.10A] Figure 10A shows an enlarged view of the flap actuator device of figure 9 during an opening sequence.
[Fig.10B] Figure 10B shows a successive view of the flap actuator device of figure 10A.
[Fig.10C] Figure 10C shows a successive view of the flap actuator device of figure 10B.

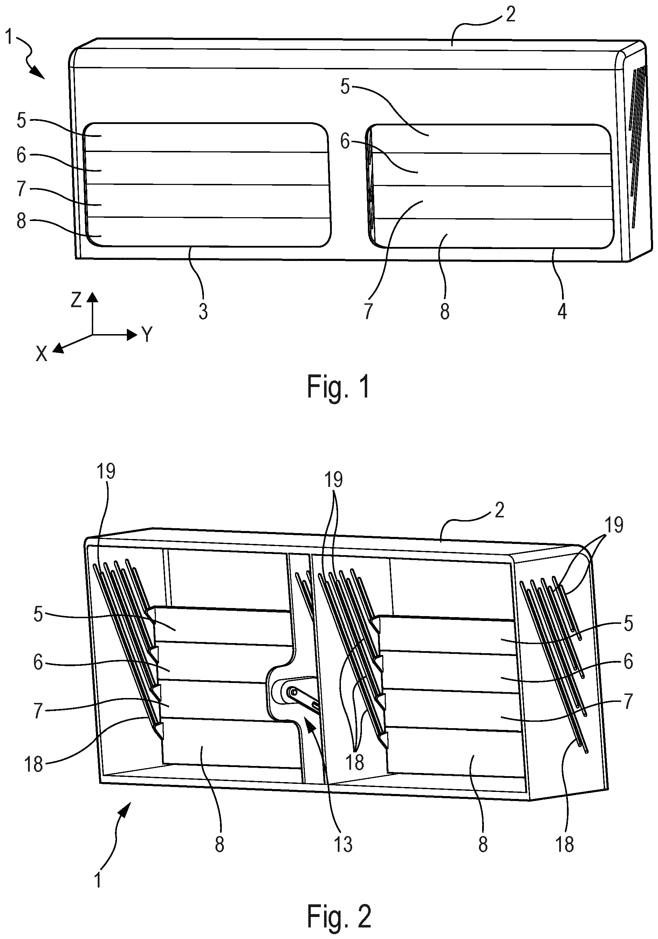

Hereinafter in the description, on a non-limiting basis, longitudinal, vertical, and transverse directions will be adopted as indicated in FIG. 1 by the trihedron (X, Z, Y) which is fixed relative to the frame. The longitudinal direction Y corresponds to the main direction of the blades of the flaps. The terms "up", "down" refers to the vertical direction Z.

In the following description, elements which are identical or similar will be designated by the same reference numbers.

### DETAILED DESCRIPTION OF THE INVENTION

The following achievements are examples. Although the specification refers to one or several embodiments, it does not imply that each reference refers to the same embodiment or that the features apply only to a single embodiment. Simple features of different embodiments can also be combined to provide other embodiments.

Figures 1 and 2 illustrate a first example of an air inflow control device 1 for a motor vehicle.

The air inflow intake device 1 comprises a frame 2 in which at least one air intake 3, 4 is provided, two air intakes 3, 4 in this embodiment (figure 1), although a different number is possible, making it possible to cause the air to circulate from the front of the vehicle towards the engine to cool it.

The air inflow intake device 1 further comprises at least two flaps 5, 6, 7, 8 behind each air intake 3, 4, for example between two and ten flaps, here four flaps 5-8 behind each air intake 3, 4.

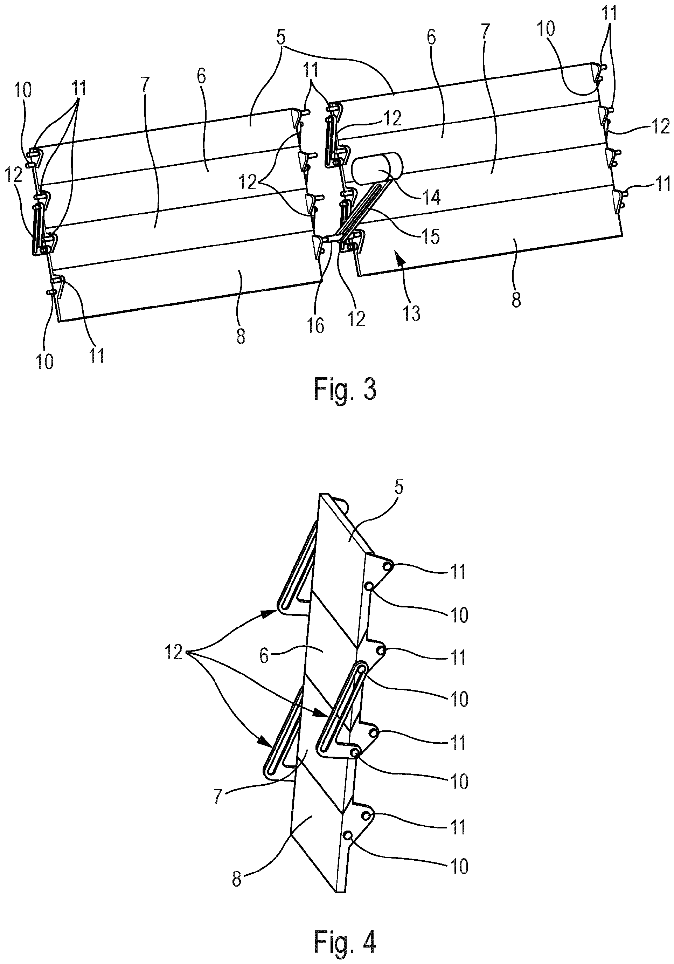

As it can be better seen in figure 3, each flap 5-8 comprises a blade, here a rectangular plate blade, that extend longitudinally (in Y direction).

Behind each air intake 3, 4, the flaps 5-8 are arranged one next to the other in the closed position. Adjacent flaps 5-8 behind each air intake 3, 4 may have cooperating shapes to engage the edges of adjacent flaps 5-8 together in the closed position (figure 4).

The flaps 5-8 can be arranged horizontally as illustrated, i.e. the flaps 5-8 are arranged one above the other in the closed position, or the flaps 5-8 may be arranged vertically (not shown). In the following description, it will be described horizontally arranged flaps 5-8.

When the air inflow control device 1 comprises at least two air intakes 3, 4, the flaps 5-8 behind each air intake 3, 4 can be horizontally aligned at least by pair such as visible in figure 3.

Behind each air intake 3, 4, the flaps 5-8 are interlinked. In other words, the flaps 5-8 are connected the ones with the others. The connection is arranged so that a movement of one without the movement of the other can be allowed in a certain extent.

Each flap 5-8 is connected with the one above and/or the one below and/or the one on the side (in the horizontal arrangement, the one on the side is behind another air intake 3, 4).

According to an interlinked embodiment of the flaps 5-8 behind one air intake 3, 4, each interlinked flap 5-8 comprises at least one respective first pin 10, such as two first pins 10 on each longitudinal end.

The air inflow intake device 1 further comprises at least one connecting piece 12 comprising a slider and a hole, a first pin 10 of a first flap being engaged in the hole and a first pin 10 of an adjacent flap sliding in the slider, to interlink these two adjacent flaps 5-8.

The first pins 10 may extend laterally (in Y direction) of the plane of the blade (figure 4).

In this example, the connecting piece 12 has a "L" shape with an angle lower than 90° between the two legs. The slider is straight and is formed in the longer leg, the hole being formed in the end of the other leg.

As example, and as better visible in figure 4, the flaps 5-8 are connected two by two with one connecting piece 12 interposed between two adjacent flaps 5-8 behind each air intake 3, 4, the connecting piece 12 being arranged alternatively on one side of the flaps 5-8 and on the other side of the flaps 5-8. Therefore, in this example, the air inflow device 1 comprises six connecting piece 12.

The air inflow control device 1 further comprises a flap actuator device 13 configured to drive a driving flap 8 of the interlinked flaps 5-8, to stack sequentially the interlinked flaps 5-8, one after the other, the interlinked flaps 5-8 being stacked the ones behind the others behind an edge of the at least one air intake 3, 4 in the open position, and to unstack sequentially the interlinked flaps 5-8, one after the other, the interlinked flaps 5-8 being arranged one next to the other in a closed position.

The flap actuator device 13 is configured to move the driving flap 8 and, due to the interlink of the flaps 5-8, the driving flap 8 drives the driven flaps 5-7 one by one behind each air intake 3, 4.

The driving flap 8 may be the lowest flap in the closed position. The opening sequence towards the open position then follows an opening direction from down to up, the interlinked flaps 5-8 being stacked behind an upper edge of air intake 3, 4 in the open position. The closing sequence towards the closed position follows a closing direction from up to down.

In another example not shown, the driving flap is the upper flap 5, the opening direction being from up to down and the closing direction being from down to up.

In another example not shown, the flaps 5-8 are arranged one next to the other vertically and the driving flap is the rightmost or the leftmost.

In an embodiment represented in figure 3, the flap actuator device 13 comprises a rotating actuator 14 and a pivoting lever 15. The rotating actuator 14 may be mounted on the frame 2, for example on a wall of the frame 2 provided between both air intakes 3, 4.

The lever 15 has one end linked to the actuator 14 and one end which cooperates with at least one driving flap 8.

As example, the end of the lever 15 cooperate with the driving flaps 8 behind each air intake 3, 4. To do that, the end of the lever 15 may cooperate with a connector 16 linked to each driving flaps 8 (figure 3).

According to an embodiment, the at least two interlinked flaps 5-8 comprise at least one respective second pin 11, such as two second pins 11 on each longitudinal blade end. These second pins 11 may be offset (in X direction) of the blade plane and thus of the first pins 10. Both first and second pins 10, 11 may be formed on a side plate of each end flap 5-8.

The connector 16 may be a tube in which each lateral second pins 11 of the two driving flaps 8 are engaged.

All the flaps 5-8 can be the same and can be made in plastic by casting.

According to an embodiment, a lever slot is formed in the lever 15 in which the connector 16 linked to the second pins 11 of both driving flaps 8 can slide.

According to an embodiment, the frame 2 comprises at least one frame slot 18 cooperating with a respective flap 5-8, here two frame slots 18 per flap 5-8, one on each side of each flap 5-8, the frame slots 18 being parallel to one another (figure 2).

In this first example, frame slots 18 are straight, as the slot formed in the lever 15.

The second pins 11 of the interlinked driven flaps 5-7 slide in a respective frame slot 18.

Moreover, the second pins 11 of the driving flaps 8 slide on the one hand, in a respective frame slot 18 and on the other hand, in the slot formed in the lever 15, here via the connector 16 which is linked to the second pins 11 of both driving flaps 8. This allows that the interlinked flaps 5-8 move in their respective frame slot 18 with the angular movement of the lever 15 provided by the actuator 14.

According to an embodiment, the frame 2 comprises additional frame slots 19 parallel to the frame slots 18 wherein the at least one first pins 10 also slides. As example, an additional frame slot 19 is made in parallel to each frame slot 18, on each side of each flap 5-8.

The driving flap 8 slides simultaneously in the slot of the lever 15 here via the connector 16, in the frame slots 18 and in the additional frame slots 19. Due to these constraints, the driving flap 8 move in its respective frame slots 18, 19 with the angular movement of the lever 15 provided by the actuator 14, here inwardly when the lever 15 pivots from down to up during the opening sequence and outwardly when the lever 15 pivots from up to down during the closing sequence.

The interlinking of the flaps 5-8, here by means of the connecting piece 12 between adjacent horizontal flaps 5-8 and by means of the connector 16 between the driving flaps 8, allows stacking and unstacking sequentially the interlinked flaps 5-8 one after the other.

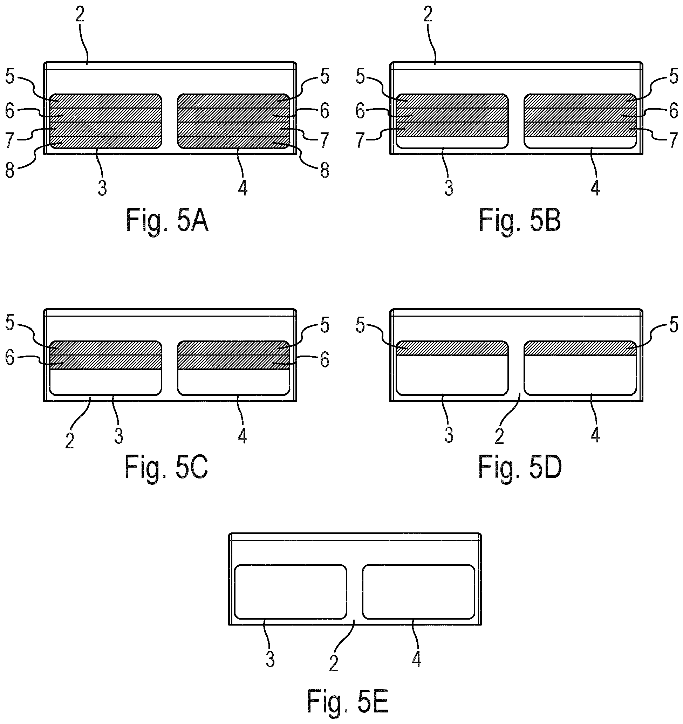

Figures 5A to 6D illustrate different successive opening positions of the flaps 5-8 for the opening sequence.

Figures 5A to 5E show four successive steps of the opening sequence. As the air intake 3, 4 opens or closes one flap by one, the opening sequence comprises as many steps as the number of flaps 5-8 by air intake 3, 4.

Figure 1, 2 and 5A show the air inflow control device 1 in an initial closed position. The interlinked flap 5-8 are arranged one above the others, obstructing the air intakes 3, 4.

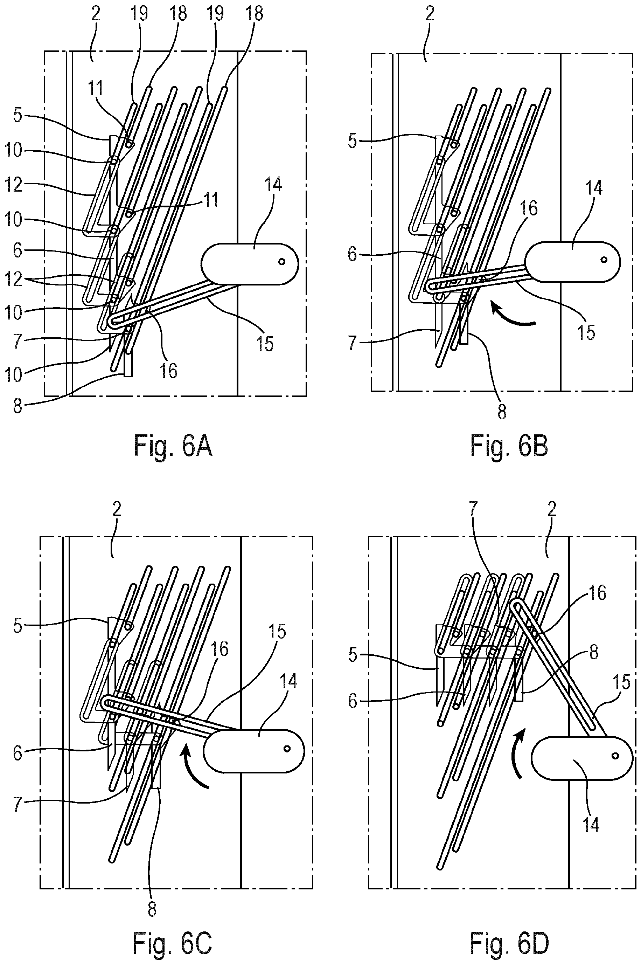

Figure 6A show a successive view of the air inflow control device 1. As the actuator 14 starts to rotate, the lever 15 pivots upwardly and thus, the connector 16 linked to the second pins 11 of the driving flaps 8 move inwardly in the slot of the lever 15. The second pins 11 of the driving flap 8 move up in their respective frame slot 18. First pins 10 of the driving flaps 8 move upwardly in their respective frame slots 18. Other flaps 5-7 stay closed and do not move.

The driving flap 8 moves along the frame slot 18, being parallel to the stationary others flaps 5-7, until being stacked in parallel behind the previous flap 7 and hidden by the previous flap 7.

As soon as the driving flap 8 of each intake 3, 4 is positioned behind and parallel to the penultimate flap 7 (first step shown in figures 5B and 6B) and due to the interlinking, and as the actuator 14 is still rotating, both flaps 7, 8 start moving together upwardly (figure 6C). Other flaps 5-6 stay closed and do not move.

As soon as the lowest and penultimate flaps 8, 7 of each intake 3, 4 is positioned behind and parallel to each second before uppermost blades 6 (second step shown in figure 5C), and due to the interlinking, the three flaps 6, 7, 8 start moving together upwardly. The other flap 5 stays closed and does not move.

As soon as all flaps 5-8 are positioned one behind the other, behind the uppermost flap 5 (third step as shown in figure 5D), all flaps 5-8 start moving together upwardly.

In the open position (four and last step shown in figures 5E and 6D), the interlinked flaps 5-8 are stacked the ones behind the others, behind an upper edge of the at least one air intake 3, 4. As all flaps 5-8 are stacked behind the edge of their respective air intake 3, 4, a maximum flow of air can circulate.

With such an arrangement, a better cooling performance can be performed in the open position. Moreover, the aesthetic of the opening and closing sequence is improved. In addition, the signature of the builder can be recognized.

When the air inflow control device 1 comprises more than one air intake 3, 4, the driving flaps 8 of each air intake 3, 4 can be driven by the same flap actuator device 13. Thus, only one flap actuator device 13 is required and costs are reduced.

This arrangement is easy to manufacture.

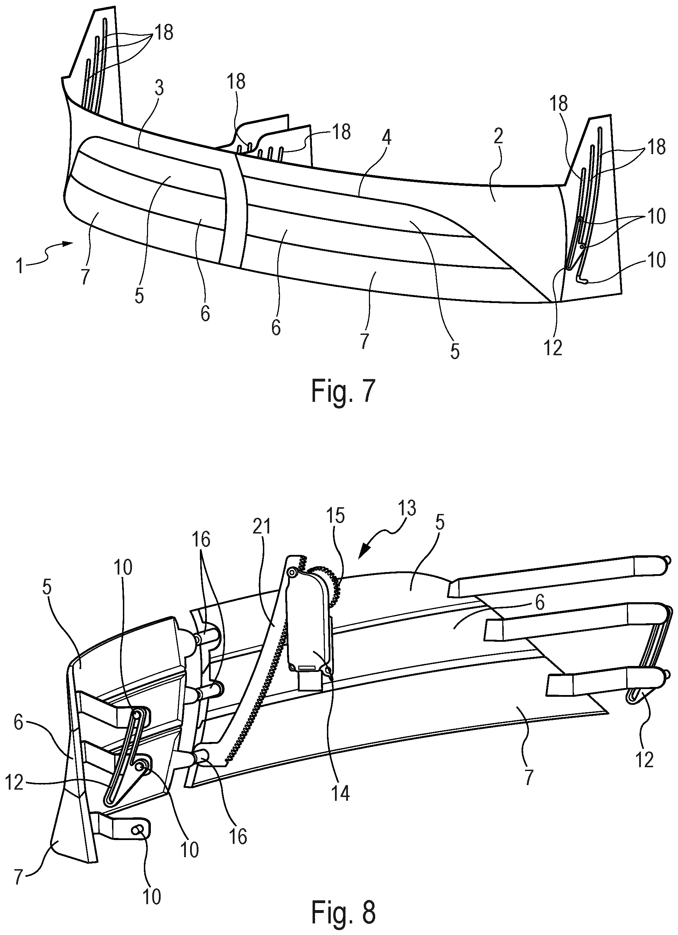

Figures 7 and 8 illustrate a second example of an air inflow control device 1 for a motor vehicle. Only the elements that differ from the first example are described.

Here, the air inflow intake device 1 comprises two air intakes 3, 4 and three flaps 5, 6, 7 behind each air intake 3, 4.

Each flap 5-7 comprises a curved blade, the flaps 5-7 being arranged one above the other in the closed position.

Each flap 5-7 comprises at least one respective first pin 10 which cooperates with the frame 2, such as two first pins 10 arranged on each side of each flap 5-7.

The flaps 5-7 behind the first and second air intakes 3, 4 are horizontally aligned by pair and are linked by pair for example by a respective connector 16 interposed between them, such as a tube in which first pins 10 at an internal side of the flap 5-7 are engaged. The air inflow control device 1 comprises three connectors 16 in this example as there are three flaps 5-7. Thus, aligned flaps 5-7 of both air intakes 3, 4 move simultaneously.

The air inflow intake device 1 further comprises at least one connecting piece 12 comprising a hole in which a first pin 10 of a flap 5-7 is engaged and a slider in which a first pin 10 of an adjacent flap 5-7 can slide, these first pins 10 being for example at the external side of each flap 5-7. In this example, the slider is slightly bent.

According to an interlinked embodiment visible in figure 8 for which aligned flaps 5-8 behind the two air intakes 3, 4 are linked by connectors 16, flaps 5-7 are interlinked two by two with a connecting piece 12 interposed between two adjacent flaps 5-8, once behind a first one air intake 3, and, once behind a second air intake 4. Therefore, the air inflow intake device 1 comprises two connecting pieces 12 in this example.

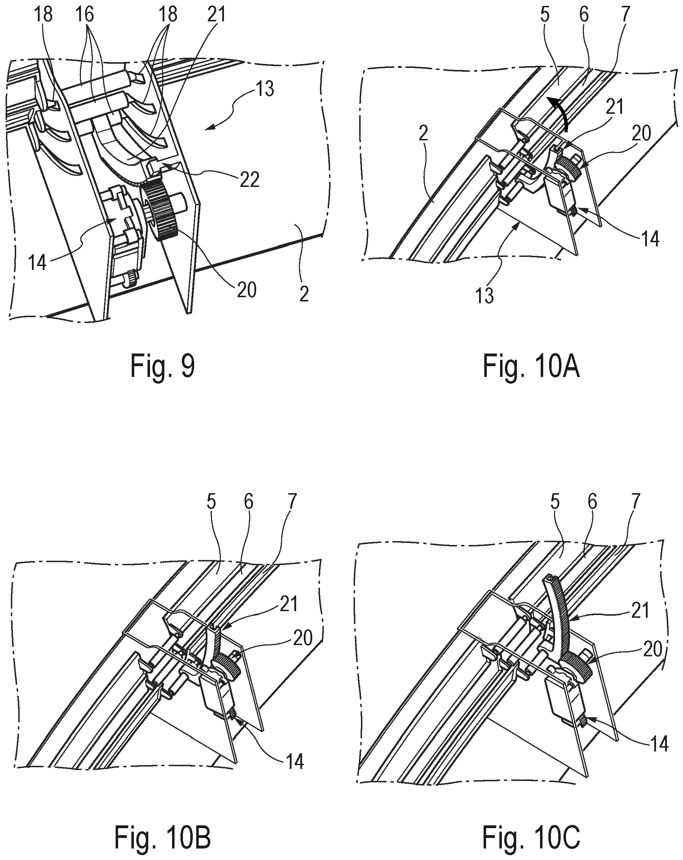

In this example, the flap actuator device 13 comprises a rotating actuator 14, a pinion 20 mounted on a shaft of the actuator 14 and a curved rack 21 linked to a driving flap 7, here the lowest flap, of the interlinked flaps 5-7, the curved rack 21 meshing the pinion 20 (figure 9).

The rotating actuator 14 and the pinion 20 can be mounted on the frame 2, for example the actuator 14 on a first wall and an axis of the pinion 20 freely rotating on a second wall, both walls being provided between both air intakes 3, 4.

The curvature of the rack 21 is for example an arc. The frame 2 may also comprise an arched guide 22, for example having a "T" shape", and protruding of the second wall of the frame 2. The arched guide 22 cooperates with a complementary groove of the curved rack 21 to guide the movement of the curved rack 21.

The frame 2 comprises at least one frame slot 18 for each flap 5-7, here two frame slots 18 per flap 5-7, one on each side of each flap 5-7, the frame slots 18 being parallel to one another (figure 7).

In this example, the frame slots 18 are curved. They have the same curvature as the curved rack 21 to follow the curved movement imposed by the cooperating of the curved rack 21 and the pinion 20 rotated by the actuator 14. The arched guide 22 is parallel to the curved frame slots 18 (figure 9).

Each flap 5-7 of the at least one air intake 3, 4 comprises at least one first pin 10 which slides in a respective frame slot 18. Here, each flap 5-7 comprises one first pin 10 on each side which slides in a respective frame slot 18. Therefore, some of the external first pins 10 slide both in the frame slot 18 and in the slider of the connecting piece 12.

Moreover, the first pins 10 of both driving flaps 7 are also driven by the curved rack 21, here via the connector 16. As example, the curved rack 21 comprising a hole in which the connector 16 is inserted.

By these constraints, the driving flaps 7 move in their respective frame slots 18 with the movement of the curved rack 21 provided by the actuator 14.

Figures 7, 10A to 10C illustrate different successive opening positions of flaps 5-7 for the opening sequence.

Figure 7 show the air inflow control device 1 in an initial closed position. The flap 5-7 extend horizontally and are arranged one above the others, obstructing the air intakes 3, 4.

Figure 10A show a successive view of the air inflow control device 1. As the actuator 14 and thus, the pinion 20 rotates, the curve rack 21 is drawn upwards, moving up the driving flap 7 of each air intakes 3, 4 as they are linked by the connector 16. Other flaps 5-6 stay closed and do not move.

Thus, the pins 10 of the driving flap 7 move inwardly in their respective frame slots 18 and by consequence, the driving flap 7 moves along the frame slot 18 until a position parallel to the previous flap 7 (figure 10B).

As soon as the driving flap 7 of each intake 3, 4 is positioned behind and parallel to the penultimate flap 6 and due to the interlinking, and as the actuator 14 is still rotating, both flaps 6, 7 start moving together upwardly. The other flap 5 stays closed and does not move.

As soon as all flaps 5-7 are positioned one behind the other, behind the uppermost flap 5, all flaps 5-7 start moving together upwardly until the open position (figure 10C) wherein all flaps 5-7 are stacked the ones behind the others, behind an edge of the at least one air intake 3, 4. A maximum flow of air can circulate.

This arrangement is easy to manufacture and is space-saving.

Other embodiments of the flap actuator device 13 are possible, such as belt drive, a plurality of coupled gears or other electrical actuator devices.

## Claims

1. An air inflow control device (1) for a motor vehicle, comprising:
- a frame (2) in which at least one air intake (3, 4) is provided, and
- at least two flaps (5-8) behind the at least one air intake (3, 4),
**characterised in that** the flaps (5-8) are interlinked, the air inflow control device (1) further comprising a flap actuator device (13) configured to drive a driving flap (8) of the at least two interlinked flaps (5-8),
- to stack sequentially the at least two interlinked flaps (5-8), one after the other, the at least two interlinked flaps (5-8) being stacked the ones behind the others behind an edge of the at least one air intake (3, 4) in the open position, and
- to unstack sequentially the at least two interlinked flaps (5-8), one after the other, the at least two interlinked flaps (5-8) being arranged one next to the other in a closed position.

2. An air inflow control device (1) according to the previous claim, wherein the at least two interlinked flaps (5-8) are arranged horizontally the one above the other in the closed position, the driving flap (8) being the lowest flap in the closed position, the opening sequence towards the open position following an opening direction from down to up, the closing sequence towards the closed position following a closing direction from up to down.

3. An air inflow control device (1) according to one of the previous claims, wherein it comprises at least two air intakes (3, 4), the at least two interlinked flaps (5-8) behind the at least two air intakes (3, 4) being horizontally aligned at least by pair, the driving flap (8) of each at least two interlinked flaps (5-8) behind each at least two air intakes (3, 4) being driven by the flap actuator device (13).

4. An air inflow control device (1) according to one of the previous claims, wherein the at least two interlinked flaps (5-8) comprise each at least one respective first pin (10), the air inflow intake device (1) further comprises at least one connecting piece (12) comprising a hole in which a first pin (10) of a flap is engaged and a slider in which a first pin (10) of an adjacent flap can slide.

5. An air inflow control device (1) according to one of claims 1 to 4, wherein the flap actuator device (13) comprises a rotating actuator (14) and a pivoting lever (15), the lever (15) having one end linked to the actuator (14) and one end which cooperates with at least one driving flap (8).

6. An air inflow control device (1) according to the previous claim, wherein the frame (2) comprises frame slots (18) parallel to one another, the at least two interlinked flaps (5-8) comprising each at least one respective second pin (11) which slides in a respective frame slot (18), the driving flap (8) also sliding in a slot formed in the lever (15) such that the at least two interlinked flaps (5-8) move in their respective frame slot (18) with the angular movement of the lever (15) provided by the actuator (14).

7. An air inflow control device (1) according to the previous claim, wherein the frame (2) comprises additional frame slots (19) parallel to the frame slot (18) wherein the at least one first pin (10) also slides.

8. An air inflow control device (1) according to one of claims 1 to 4, wherein the flap actuator device (13) comprises a rotating actuator (14), a pinion (20) mounted on a shaft of the actuator (14) and a curved rack (21) linked to a driving flap (7) of the interlinked flaps (5-7), the curved rack (21) meshing the pinion (20).

9. An air inflow control device (1) according to the previous claim, wherein the frame (2) comprises frame slots (18) parallel to one another, the at least two interlinked flaps (5-8) comprise at least one respective first pin (10) which slides in a respective frame slot (18) such that the interlinked flaps (5-8) move in their respective frame slot (18) with the movement of the curved rack (21) provided by the actuator (14).
